# EUROPEAN PATENT SPECIFICATION

(11) **EP 3 092 424 B1**
(45) Date of publication and mention of the grant of the patent: **21.11.2018**
(21) Application number: 14831082.4
(22) Date of filing: 11.12.2014
(51) Int. Cl.: F16H 21/18, F16H 21/36, F02B 75/28, F01L 7/04, F01B 7/14

(54) **MECHANISM FOR A RECIPROCATING POSITIVE-DISPLACEMENT MACHINE**
MECHANISMUS FÜR EINE OSZILLIERENDE VERDRÄNGERMASCHINE
MÉCANISME POUR UNE MACHINE VOLUMÉTRIQUE ALTERNATIVE

(30) Priority: 11.12.2013 IT TO20130175
(43) Date of publication of application: 16.11.2016
(73) Proprietor: Vallacqua, Giulio, Aosta (IT)
(72) Inventor: Vallacqua, Giulio, Aosta (IT)
(74) Representative: Giannini, Manuela
(86) International application number: PCT/IB2014/066815
(87) International publication number: WO 2015/087280

(56) References cited:
- FR-A- 454 107
- US-A- 2 781 749
- US-A- 5 351 657

## Description

### TECHNICAL FIELD

The present invention relates to a mechanism for a reciprocating positive-displacement machine.

### BACKGROUND ART

In engineering, the term 'mechanism', referred to a reciprocating positive-displacement machine, be it a driving or operating machine, depending on whether it produces or absorbs mechanical energy, generally refers to an assembly of mechanical parts for transferring motion and mechanical power from a drive or input part to a driven or output part of the machine.

In a reciprocating positive-displacement driving machine, such as an internal combustion engine, the mechanism usually serves to convert the reciprocating movement of a piston - produced by the pressure of a work fluid, such as oil, compressed air, compressed gas, or steam - to rotation of an output drive shaft. Conversely, in reciprocating operating machines, such as reciprocating compressors or pumps, the mechanism converts continuous rotation of an input shaft to linear reciprocating movement of a piston.

The mechanism commonly used to transfer mechanical power in reciprocating positive-displacement machines normally comprises a piston reciprocating inside a fixed cylinder; and a rotary drive crank mechanism, known as a connecting rod-crank mechanism, comprising a crank connected to the drive shaft, and a connecting rod hinged at its big end to the crank, and at its small end to a pin integral with the piston.

As the volume inside the cylinder varies periodically, the work fluid is admitted or expelled through openings or ports, which must be opened and closed alternately by valves, depending on the operating cycle of the machine.

With the exception of positive-displacement operating machines, such as compressors and pumps, in which the valves may be operated automatically, i.e. directly by the difference in work fluid pressure produced inside the machine, the valves must normally be controlled by a timing mechanism designed to open and close the work fluid intake and exhaust ports with a given timing.

The valves are normally so-called poppet valves, or slide valves, also known as gate valves, and the timing mechanism comprises a number of dedicated timing components controlled indirectly by the machine's power mechanism.

Poppet valves, which are found, for example, in most four-stroke engines, are normally operated by a dedicated timing mechanism normally comprising a camshaft for timing the valves; a transmission for transmitting motion from the drive shaft to the camshaft; and a number of components, such as followers, rocker arms, rods and springs, interposed between the respective valves and the camshaft to control opening and closing of the valves.

Slide valves are normally in the form of sliding mechanisms (as in certain pneumatic actuators and steam machines), disk valves, conical or cylindrical plug valves fitted to the cylinder head, or movable sheaths, and are normally operated by dedicated timing mechanisms, such as articulated lever systems, separate from the power mechanism.

An automatically timed slide valve system, i.e. with slide valves controlled directly by the power shaft, is only found in multicylinder solutions, in which a fixed or rotary timing element caters sequentially to a number of respectively rotating or fixed cylinders bunched axially or radiating inside a drum.

Except for sequential automatic timing of multiple cylinders, which is only suitable for compressors, pumps or hydraulic motors, no automatic timing solutions for single fixed cylinder machines are known, in which the slide valves are operated directly by component parts of the power crank mechanism, without recourse to other specific mechanisms.

Only in the case of two-stroke engines does the operating cycle of the machine allow the work fluid to be timed directly by the power mechanism. More specifically, in two-stroke engines, the valves are defined by openings formed in the cylinder wall and so located as to be opened and closed by the piston reciprocating along the cylinder, and so perform a work cycle for each back and forth stroke of the piston.

The absence of a dedicated timing mechanism and, therefore, of multiple transmission parts and systems makes two-stroke engines extremely easy and relatively cheap to produce, more reliable because of the smaller number of moving parts, and less noisy.

FR 454 107 A discloses an explosion engine rotating about its longitudinal axis. In this engine, the connecting rod, the crank shaft, and the support on which the crank shaft is mounted are not driven in this rotational movement in order to avoid eccentric oscillations.

US 5 351 657 discloses a rotary power device having one or more pistons reciprocably received in a cylinder sleeve rotatably supported within a housing. A cam and follower mechanism acting between the housing and piston governs reciprocating motion of the piston(s) within the sleeve. Rotary power can be extracted from the sleeve, or reciprocating power can be extracted from the piston(s). The rotating cylinder functions as a sleeve valve and permits, depending on the porting, use of the device as a gas-expansion engine (e.g. steam or compressed air) or pump, or as a two-stroke or four stroke internal combustion engines using spark or compression ignition.

US 2 781 749 discloses an outboard motor comprising a pair of crankshafts rotatably journaled in a housing, reciprocating opposed pistons slidable in a cylinder disposed between said crankshafts, a tubular sleeve valve rotatable in the cylinder, and connecting means to transmit the power from one crankshaft to the other for simultaneously rotation of the crankshaft and the valve.

### DISCLOSURE OF THE INVENTION

It is an object of the present invention to provide a mechanism for reciprocating positive-displacement machines, which provides for automatic timing - i.e. timing by the crank mechanism, with no additional devices required - using slide valves, regardless of whether the machine is a driving or operating machine, and regardless of the nature of the work fluid.

According to the present invention, there is provided a mechanism for reciprocating positive-displacement machines, as claimed in claims 1, 2 and 3 and preferably in dependent claim 4 depending directly on claims 1, 2 and 3.

### BRIEF DESCRIPTION OF THE DRAWINGS

A number of non-limiting embodiments of the present invention will be described by way of example with reference to the attached drawings, in which :
Figure 1 shows a section, along line A1-A1 in Figure 4, of a preferred embodiment of the mechanism according to the present invention fitted to a reciprocating positive-displacement machine;
Figure 2 shows a section along line B1-B1 in Figure 1;
Figure 3 shows a section along line C1-C1 in Figure 1;
Figure 4 shows a section along line D1-D1 in Figure 1;
Figure 5 shows a section, along line A2-A2 in Figure 6, of a first variation of the Figure 1 mechanism;
Figure 6 shows a section along line B2-B2 in Figure 5;
Figure 7 shows a section along line C2-C2 in Figure 5;
Figure 8 shows a section along line D2-D2 in Figure 5;
Figure 9 shows the straight hypocycloid curves defining the linkages of the mechanical transmission relative to the Figure 5 and 10 variations;
Figure 10 shows a section, along line A3-A3 in Figure 11, of a second variation of the Figure 1 mechanism;
Figure 11 shows a section along line B3-B3 in Figure 10;
Figure 12 shows a section along line C3-C3 in Figure 10;
Figure 13 shows a section along line D3-D3 in Figure 10;
Figure 14 shows, schematically, an example of the Figure 1-4 mechanism applied to a reciprocating positive-displacement machine;
Figure 15 shows, schematically, an example of the Figure 10-13 mechanism applied to a reciprocating positive-displacement machine;
Figure 16 shows a view in perspective, with parts removed for clarity and with enlargements, of the Figure 14 or 15 reciprocating positive-displacement machine.

### BEST MODE FOR CARRYING OUT THE INVENTION

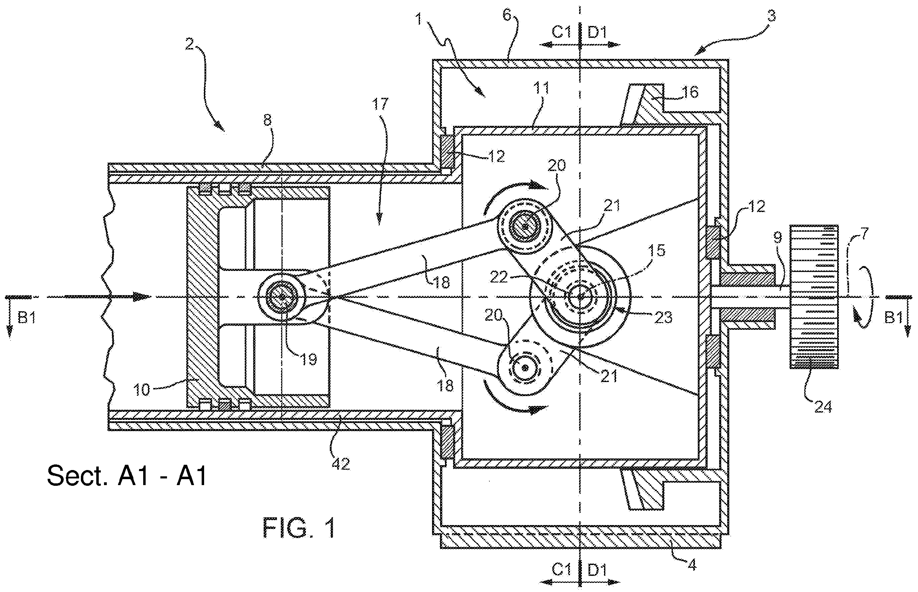

Number 1 in Figure 1 indicates as a whole a mechanism for a reciprocating positive-displacement machine.

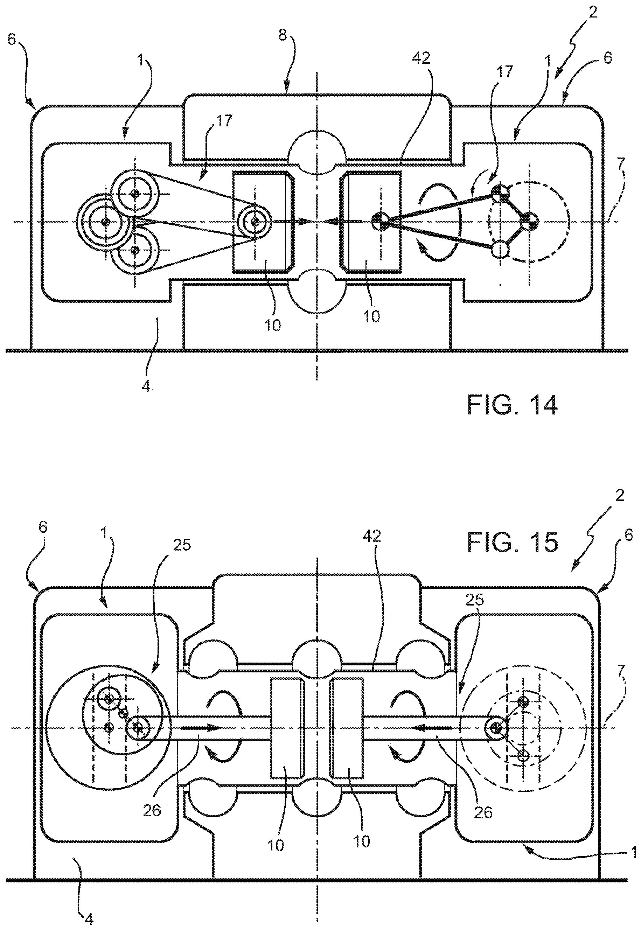

More specifically, the examples described herein refer to a machine 2 with opposed pistons and illustrated in two different embodiments in Figures 14, 15 and 16.

As explained in more detail below, mechanism 1 is designed for use in both reciprocating positive-displacement driving machines, such as external combustion, compressed-air, steam or gas hydraulic motors, and operating machines, such as pumps and compressors.

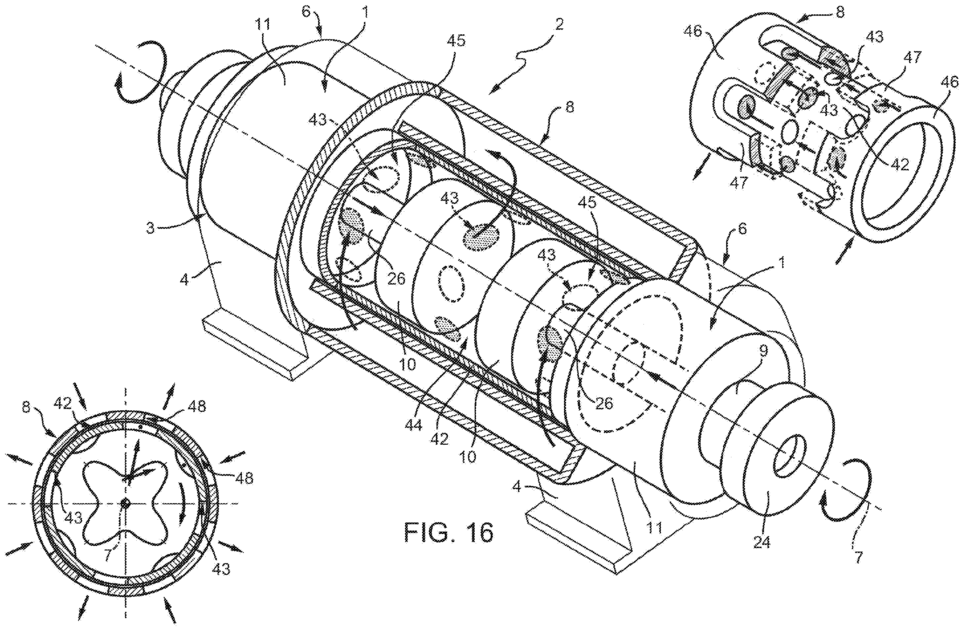

As shown schematically in Figure 16, machine 2 comprises a casing 3 fitted rigidly to a base 4 and defined by a hollow body comprising two end shells 6 aligned along an axis 7, and a hollow centre sleeve 8 - for the purpose described below - coaxial with axis 7 and connecting shells 6 integrally to each other. Since the structure of machine 2 is substantially specular with respect to a plane perpendicular to axis 7 and through the centre line of sleeve 8, only one of the two identical halves of which machine 2 may be considered composed is described below. More specifically, each half of machine 2 comprises a power output or input drive shaft 9 coaxial with axis 7; and a piston 10 mounted to move, inside sleeve 8, along and about axis 7, as described below.

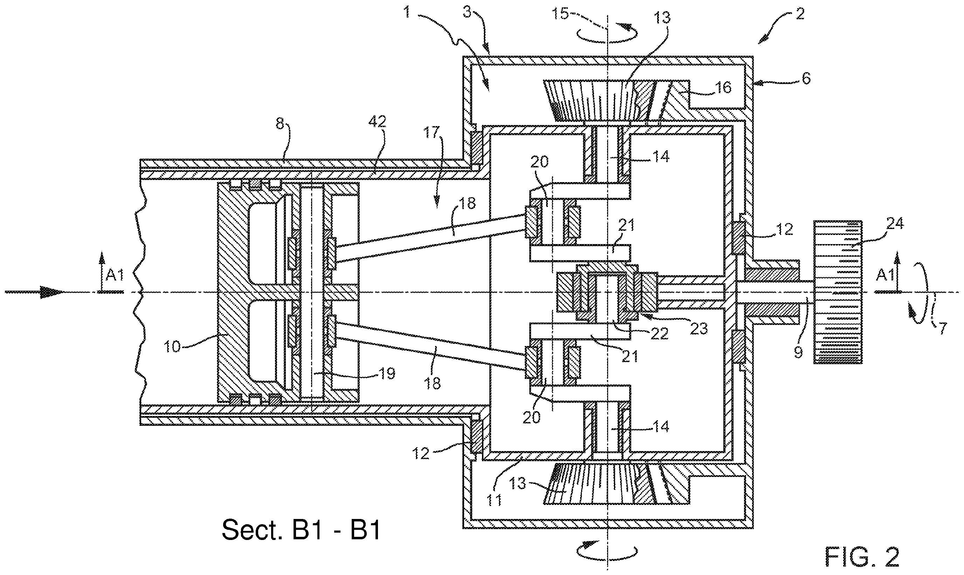

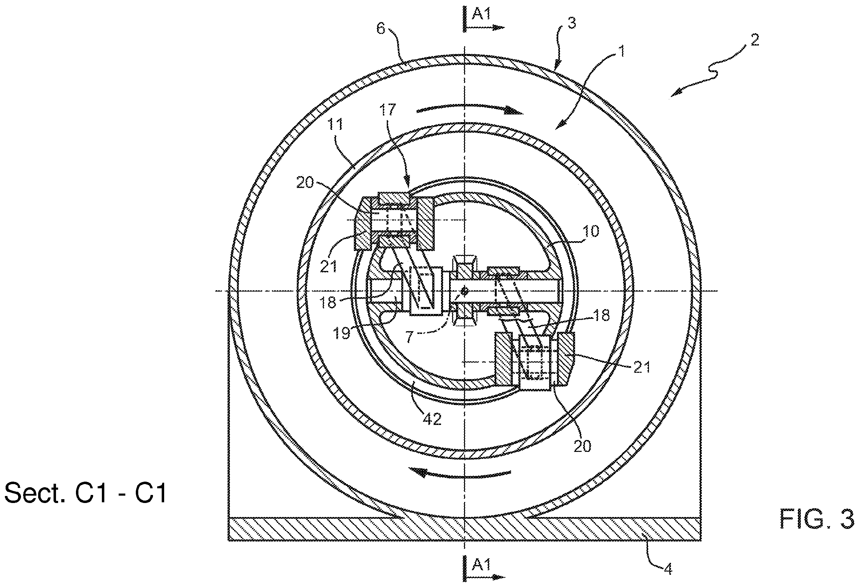

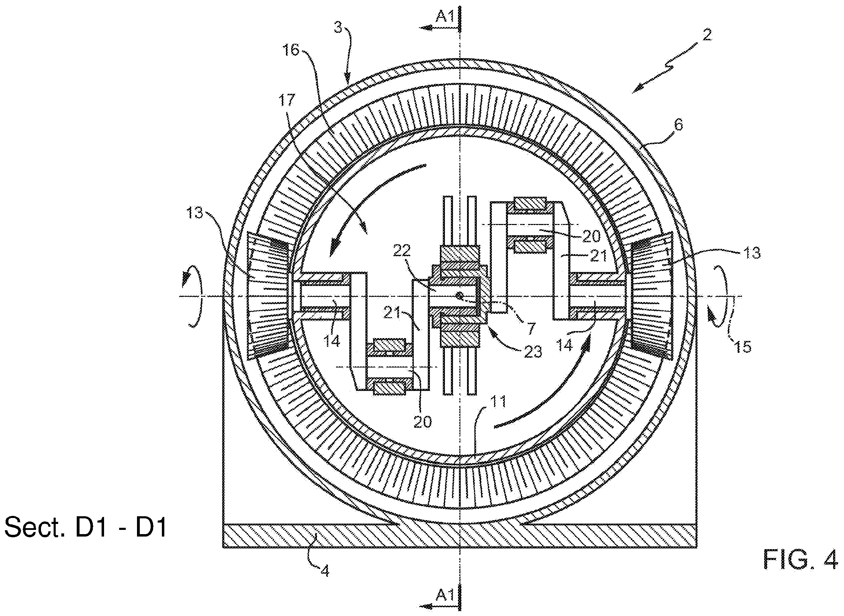

With reference to Figures 1 to 4, each half of machine 2 houses a mechanism 1, which, if the machine is a driving machine, serves to transfer mechanical power from piston 10 to drive shaft 9, to rotate and translate piston 10 and rotate drive shaft 9 about axis 7, in response to axial thrust generated, in use, by the pressure of the work fluid and exerted on piston 10. Conversely, if applied to an operating machine, mechanism 1 serves to transfer mechanical power from drive shaft 9 to piston 10, to rotate and translate piston 10 about and along axis 7, in response to external torque on drive shaft 9.

As shown in Figures 1 to 4, mechanism 1 comprises a housing 11 mounted, with the interposition of bearings 12, inside a respective shell 6, and connected integrally to drive shaft 9 to rotate, in use, about axis 7.

Housing 11 supports two opposed pinions 13 located outside housing 11, diametrically opposite with respect to axis 7, and fitted to respective shafts 14, which are coaxial with each other and with a common axis 15 perpendicular to axis 7, are fitted in rotary manner through housing 11, and extend from housing 11 towards axis 7.

Rotating in opposite directions, pinions 13 mesh with a ring bevel gear 16 which, like pinions 13, forms part of mechanism 1, extends about housing 11, coaxially with axis 7, and is fitted rigidly to shell 6.

Mechanism 1 also comprises a crank mechanism 17 housed inside housing 11, and which associates counter-rotation of pinions 13 with a reciprocating movement along axis 7, i.e. the actual rotation axis of housing 11.

As shown clearly in Figures 1-4, crank mechanism 17 comprises two connecting rods 18 mounted at their small ends to rotate, by means of respective bearings, about a pin 19 integral with piston 10 and perpendicular to axis 7. The big ends of connecting rods 18 pivot, also by means of bearings, about respective crank pins 20. Each crank pin 20 is connected by crank arms 21 to respective journals 22, the outer one of which is defined by a corresponding shaft 14 of a relative pinion 13, and the inner one of which is connected in rotary manner, together with the other inner journal, to a main bearing 23.

Sections A1-D1 in Figures 1 to 4 show operation of mechanism 1, and the rotation directions of its various component parts. More specifically, mechanism 1 is designed so that, when used in a driving machine, axial thrust exerted on piston 10 by the work fluid pressure is converted by crank mechanism 17 to rotation of shafts 14 and therefore of pinions 13, which mesh with ring bevel gear 16 to rotate housing 11 and therefore drive shaft 9 about axis 7, so drive shaft 9 transmits mechanical power to the outside via a gear 24 or any other suitable transmission means. Conversely, in an operating machine, power is transmitted, as stated, from shaft 9 to piston 10.

Crank mechanism 17 being angularly integral with housing 11, rotation of housing 11 is obviously also transmitted rigidly to crank mechanism 17 and piston 10, which therefore rotates about axis 7 synchronously with drive shaft 9.

In connection with the above, it is important to note that, with appropriate angles between the axes of connecting rods 18 and pin 19, both the radial resultant and the moment about axis 7 of their opposite thrusts can be eliminated, thus eliminating any transverse thrust produced by the movement of piston 10.

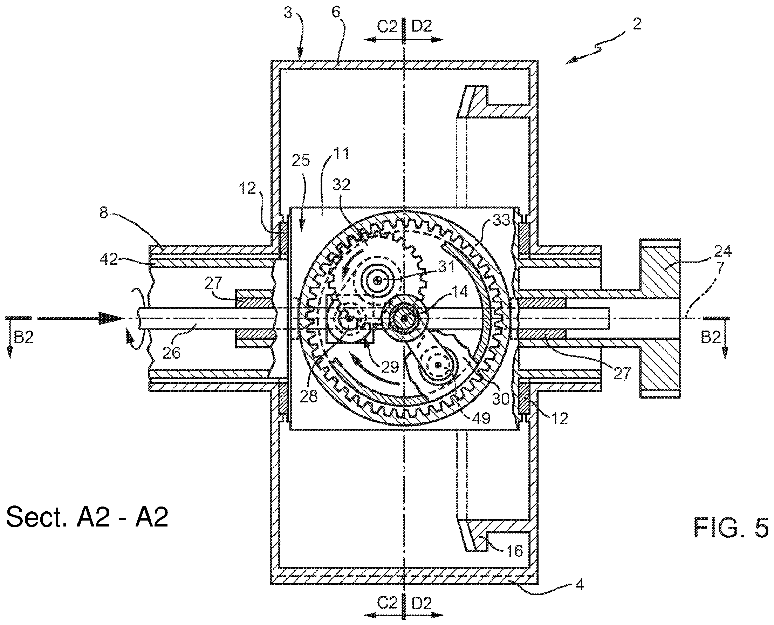

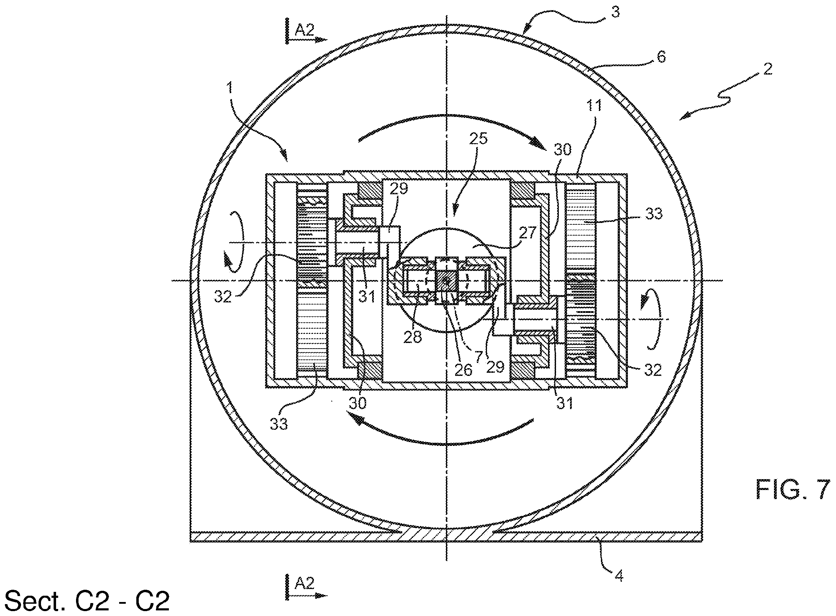

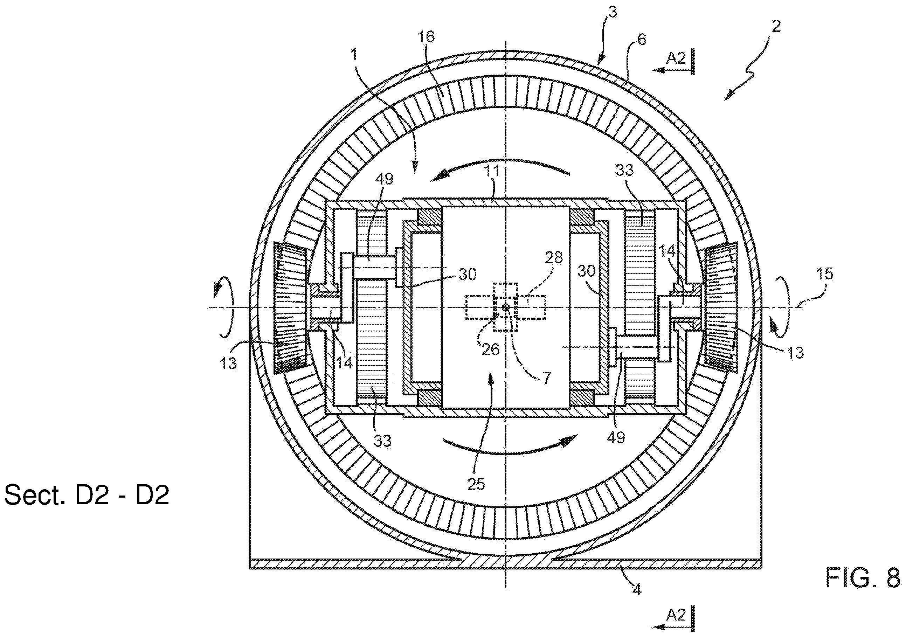

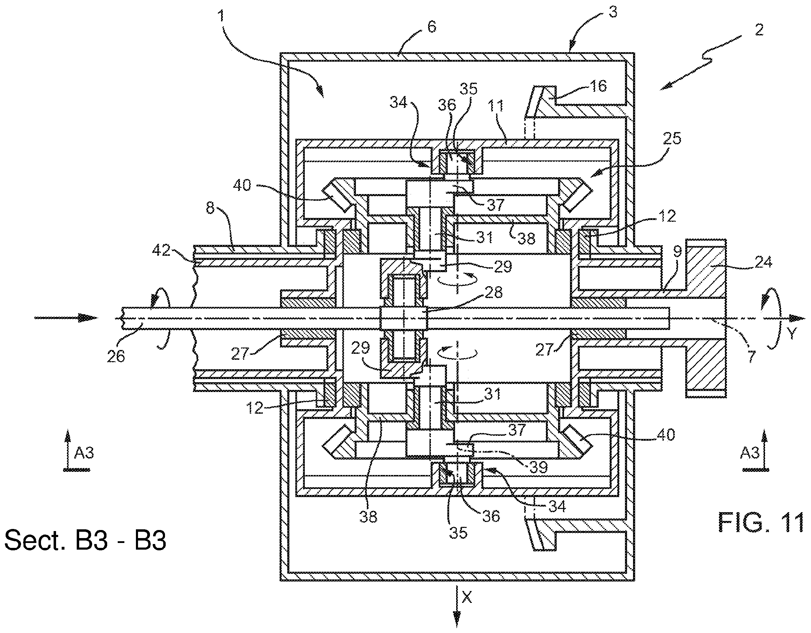

Figures 5-8 and 10-13 show two variations of mechanism 1 described above with reference to Figures 1-4, and both of which, like the latter, comprise a housing similar to housing 11 and fitted to shell 6 to rotate about axis 7, and two pinions similar to pinions 13 and meshing with ring bevel gear 16. For the sake of clarity, therefore, the parts of mechanism 1 structurally or conceptually similar in all three embodiments described are indicated using the same reference numbers.

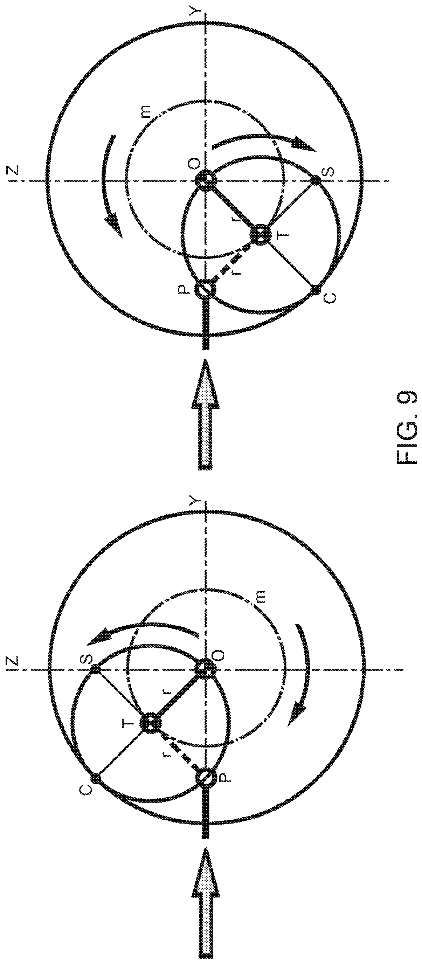

The Figure 5-8 and 10-13 variations of mechanism 1 differ from the Figure 1-4 embodiment as regards crank mechanism 17 which, in the two variations, is replaced by a mechanical transmission 25 which operates on the basis of the geometry and linkages of straight hypocycloids as shown schematically in Figure 9.

As shown in Figure 9, straight hypocycloids are generally traced by any point on a small circle rolling inside a larger circle of twice the diameter, without sliding at the point of contact C. More specifically, points P and S on the smaller circle trace straight hypocycloids coincident with the diameters of the larger circle along the y and z axes respectively - diameters which, mechanism-wise, may be thought of as two links guiding two slides P and S. To prevent them from interfering at centre O, the links must lie in different planes at different levels, parallel to the (y, z) plane along a perpendicular axis x.

Point T, at a constant distance r from O, travels along a circular trajectory m, and may be thought of as the pin of crank OT, i.e. the big end of connecting rod PT. Being the same length r, the connecting rod and crank are superimposed along axis z. To prevent them from interfering there, and to avoid over-parting the pins projecting in direction x, it is best that the crank pin whose x axis passes through O extends with its bearing beyond the diameter of the larger circle, to allow connecting rod PT to rotate freely inside it.

As shown in Figure 9, the motion of points P is identical along the same diameter of the larger circle, if generated by smaller circles symmetrical with respect to the y axis and rotating in opposite directions. And this motion is simply sinusoidal if rotation of the smaller circles is uniform.

Figures 5-8 show a first embodiment of transmission 25, the geometry of which is based on the same criteria as described above, so the component parts of which are indicated, where possible, in the following description using the corresponding elements in the Figure 9 operating diagrams.

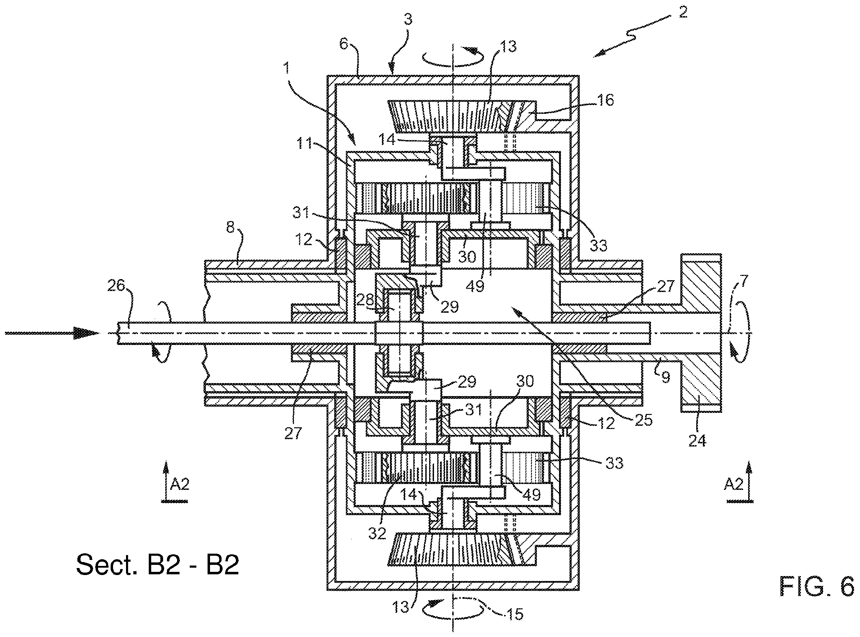

With reference to Figures 5 and 6, transmission 25 comprises a rod 26 coaxial with axis 7, fitted rigidly at one end with piston 10 (not shown), and mounted through two prismatic guides 27, integral with housing 11, to reciprocate linearly along axis 7 together with piston 10.

Two right-angle connecting rods 29, on opposite sides of axis 7, are hinged at their small ends to rod 26 by two pins 28, and are connected in rotary manner at their big ends to respective cranks 30.

More specifically, as shown in Figures 5-8, each big end is defined by a pin 31 extending eccentrically, with the interposition of a bearing, through a circular member (Figure 5), which defines said crank 30 and is fitted to housing 11, with the interposition of bearings, to rotate about axis 15 of pinions 13 (Figure 6) .

Pins 31 are fitted at their free ends with respective counter-rotating gears 32, each of which meshes with a ring gear 33 coaxial with axis 15, integral with housing 11, and of twice the diameter of gear 32.

On the same side as respective gear 32, each crank 30 is fitted rigidly and eccentrically with a shaft 49 parallel to axis 15 and connected rigidly, at its free end and by means of a transverse plate, to a corresponding shaft 14 and therefore to a respective pinion 13 meshing with ring bevel gear 16.

With reference to Figure 9, mechanism-wise, the two counter-rotating right-angle connecting rods 29 can be represented schematically by segment PT, and are hinged to respective cranks 30, with eccentricity r, at two points T symmetrical with respect to axis y in Figure 9. The pitch lines of gears 32 coincide with the smaller circles of the two hypocycloids, and the pitch lines of the two inner ring gears 33, integral with housing 11 and meshing with gears 32, coincide with the larger circles of the hypocycloids. In other words, the radii of cranks 30 being equal to the length of right-angle connecting rods 29 and to the pitch radius of gears 32, pins 28 travel along a straight hypocycloid trajectory as gears 32 roll inside ring gears 33.

In this mechanism configuration, reciprocating movement of rod 26, and therefore of pins 28, along axis 7 (y diameter of the larger circle in Figure 9) produces, by means of right-angle connecting rods 29, counter-rotation of cranks 30 and pinions 13, which in turn rotate housing 11 with rod 26 about axis 7 (y axis in Figure 9). Conversely, in the case of an operating machine, if motion is produced by gear 24, rotation of drive shaft 9, and therefore of housing 11 integral with it, is transmitted to pinions 13 which, rotating about 15, rotate cranks 30 which in turn rotate gears 32 about axis 15. Finally, rotation of gears 32 is converted by respective right-angle connecting rods 29 to linear reciprocating movement of rod 26 and therefore piston 10.

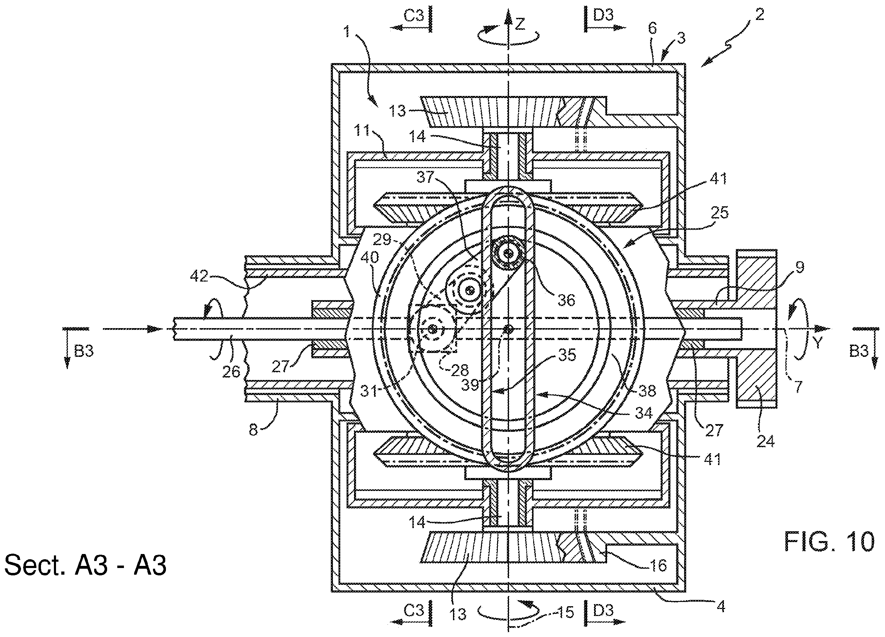

Figures 10-13 show a further embodiment of transmission 25, also based on straight hypocycloid criteria. Unlike the example described above, in this case, the motion of point P in Figure 9 (i.e. of rod 26) along the y axis (i.e. axis 7) is guided, not by the smaller circles rolling on the larger circles (i.e. by gears 32), but by points S moving back and forth along the z axis.

This is achieved by means of two links 34 comprising respective slots 35 formed in housing 11, on opposite sides of axis 15; and respective slides 36, each of which engages a respective slot 35 transversely in rotary manner, and is connected rigidly by a plate 37 to a respective pin 31, i.e. to the small end of a respective right-angle connecting rod 29 connected to rod 26 by pins 28.

As in the Figure 5-8 example described above, the big end of each connecting rod is defined by a pin 31 extending eccentrically, with the interposition of a bearing, through a circular member (Figure 10), which defines a crank 38 and is fitted to housing 11, with the interposition of bearings, to rotate about an axis 39 perpendicular to axis 7 and to the rotation axis 15 of pinions 13.

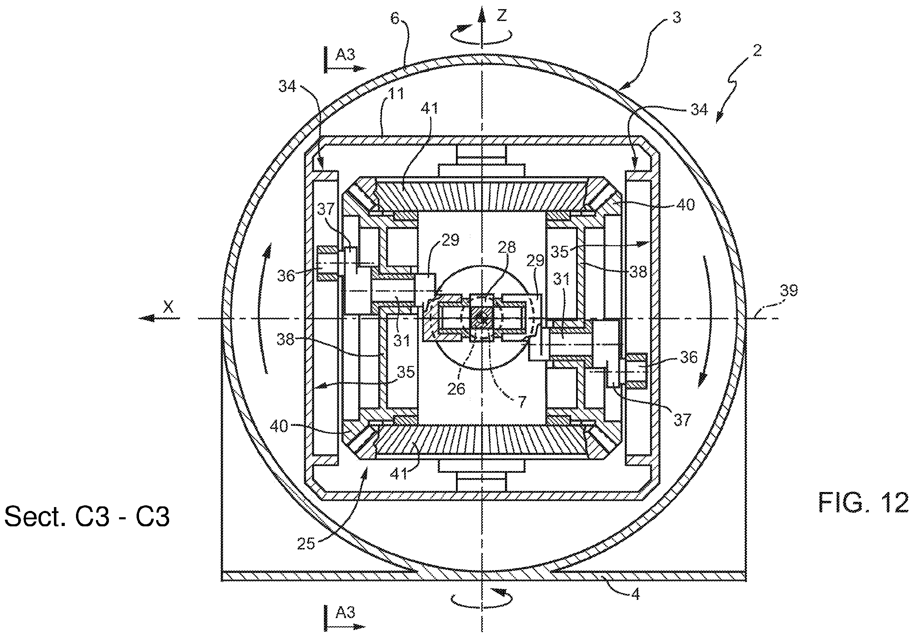

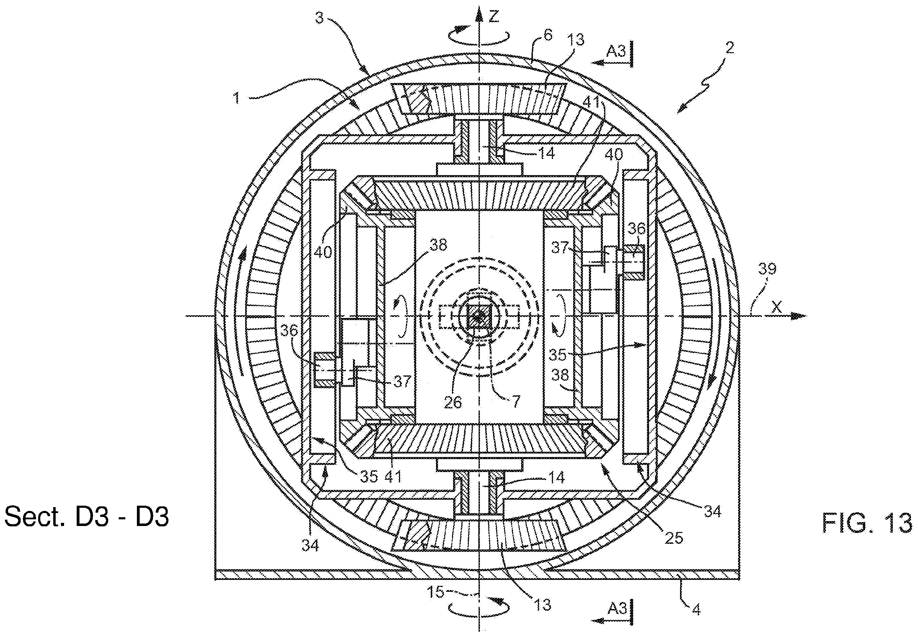

On the outside, each crank 38 has a toothed annular flange 40 coaxial with axis 39, and which meshes with a respective transmission bevel gear 41 (Figures 12 and 13) coaxial with axis 15 and connected integrally to a respective shaft 14 of a respective pinion 13.

With reference to Figure 9, mechanism-wise, each right-angle connecting rod 29 with respective plate 37 and relative slide 36 can be represented schematically by segment PTS, and rotates, in the opposite direction to the other right-angle connecting rod 29, following the linear movements of rod 26 by means of pins 28 (connecting rod small end), representable schematically by point P moving along axis y in Figure 9, and the linear movement of slide 36 along slot 35, representable schematically by point S moving along axis z in Figure 9. The circular movements of the big ends of the connecting rods, i.e. of pins 31, are representable schematically by the movements of points T along trajectories m.

In this mechanism configuration, reciprocating movement of rod 26, and therefore of pins 28, along axis 7 (diameter y of the larger circle in Figure 9) produces, by means of right-angle connecting rods 29 and links 34, a counter-rotation of cranks 38 about axis 39. By virtue of toothed flanges 40 meshing with respective gears 41, rotation of cranks 38 rotates shafts 14 and relative pinions 13, which in turn rotate housing 11 with rod 26 about axis 7 (axis y in Figure 9).

Conversely, in the case of an operating machine, if motion is produced by gear 24, rotation of drive shaft 9, and therefore of housing 11 integral with it, is transmitted to pinions 13 which, rotating about 15, rotate gears 41 which in turn rotate toothed flanges 40, i.e. cranks 38, about axis 39. Finally, rotation of cranks 38 is converted by respective right-angle connecting rods 29 and respective links 34 to linear reciprocating movement of rod 26 and therefore piston 10.

Compared with the Figure 5-8 transmission 25, for a given travel of rod 26 and a given diameter of housing 11, this variation is more compact and robust, and can transmit more power.

Figures 14, 15 and 16 show operating schematics of machine 2 employing the first embodiment (Figures 1-4) of mechanism 1 (Figure 14), and the second and third embodiments (Figures 5-8 and 10-13) of mechanism 1 (Figures 15 and 16).

The advantage of mechanism 1 according to the present invention substantially lies in it not only transferring mechanical power from the piston to the drive shaft and vice versa, but also allowing automatic timing using slide valves, and so eliminating the need for complex dedicated timing components, such as currently used poppet valves.

More specifically, mechanism 1 makes such automatic timing possible by combining along the same axis a reciprocating movement - that of the piston - and a rotary movement - that of the housing and piston together - in response to axial thrust exerted on the piston or torque applied to the drive shaft.

In the Figure 16 example, machine 2 is an opposed-piston machine and comprises, for each piston, a mechanism 1 housed at a respective axial end of casing 3. More specifically, housings 11 of mechanisms 1 are mounted to rotate about axis 7 inside respective fixed shells 6 of casing 3, and are connected rigidly to each other by a timing sleeve or sheath 42, in which two flat-topped double-acting pistons 10 reciprocate along axis 7. Sheath 42 has a number of openings or ports 43, which operate as work fluid timing slide valves, and are located along and about axis 7, at a centre chamber 44 and two lateral chambers 45 defined inside sheath 42 by the two pistons 10 as they reciprocate.

As shown in the Figure 16 detail, hollow sleeve 8 surrounding sheath 42 comprises two annular end bodies 46 defining an intake manifold and exhaust manifold respectively; and a number of axial tubular members 47 arranged comb-fashion, closed at one end, and communicating alternately, at the open end, with the intake manifold and exhaust manifold.

On their lateral walls contacting sheath 42, tubular members 47 have a number of openings 48 arranged, like ports 43 in sheath 42, along and about axis 7.

In actual use, as pistons rotate and translate, and sheath 42 is rotated by mechanism 1, ports 43 in sheath 42 and openings 48 in tubular members 47 are superimposed periodically to cyclically connect centre chamber 43 and lateral chambers 44 to the intake and exhaust manifolds.

In other words, sleeve 42, together with pistons 10, acts as a slide valve by which to automatically time the work fluid.

Assigning the slide valve timing function to the power transmission mechanism, i.e. to mechanism 1, by virtue of the rotation and reciprocating movement performed by mechanism 1, has numerous major advantages over existing machines with valves controlled by dedicated timing components. For example, by eliminating specific timing components and so reducing the number of moving parts, the machine is mechanically simpler, is therefore cheaper to produce, is more reliable and silent-operating, and is organically more efficient than complex currently used mechanisms.

Using mechanism 1 in a reciprocating positive-displacement machine, the machine is also intrinsically symmetrical and therefore perfectly balanced, almost in the same way as a straightforward gear train, with no parasitic vibration, and without the cost and friction of additional currently used balancing devices, such as counter-rotating cams.

Other advantages of mechanism 1, particularly the embodiments described with reference to Figures 5-8 and 10-13, derive from the possibility of accommodating double-acting pistons in the cylinders, thus making the machine more compact for a given power.

## Claims

1. A mechanism for a reciprocating positive-displacement machine, the machine being of the type comprising at least a first power input/output member comprising a shaft (9); and at least a second power input/output member comprising at least a piston (10) reciprocating along a first axis (7); the mechanism (1) being interposed between the first and second power input/output member to transfer mechanical power from one to the other, and comprising a first portion (11) designed to connect angularly to the shaft (9) to rotate integrally with it, and a second portion (17; 25) connected angularly to the first portion (11) to rotate integrally with it, and having one end designed to connect to the piston (10); the mechanism being designed to rotate the first portion (11) about said first axis (7) and simultaneously reciprocate the piston (10) along the first axis (7), in response to axial thrust exerted on the piston (10) or torque applied to the shaft (9); wherein the first portion (11) comprises a box body (11) designed to fit inside a fixed frame (3) of the machine to rotate about the first axis (7) by a gear train comprising two pinions (13), which rotate about a second axis (15) perpendicular to the first axis (7), and mesh with a ring gear (16) integral with said frame (3); wherein the second portion (17; 25) is housed inside the box body (11) and comprises a connecting rod-crank mechanism (17), which comprises a crankshaft rotating about the second axis (15) and connecting rod means (18), the small end of which defines said end of the second portion (17; 25) and is hinged to the piston (10) to reciprocate with it along the first axis (7) **characterised in that** the crankshaft comprises two counter-rotating half-crankshafts connected to said pinions (13) and hinged to each other by a main bearing fitted to the box body (11) .

2. A mechanism for a reciprocating positive-displacement machine, the machine being of the type comprising at least a first power input/output member comprising a shaft (9); and at least a second power input/output member comprising at least a piston (10) reciprocating along a first axis (7); the mechanism (1) being interposed between the first and second power input/output member to transfer mechanical power from one to the other, and comprising a first portion (11) designed to connect angularly to the shaft (9) to rotate integrally with it, and a second portion (17; 25) connected angularly to the first portion (11) to rotate integrally with it, and having one end designed to connect to the piston (10); the mechanism being designed to rotate the first portion (11) about said first axis (7) and simultaneously reciprocate the piston (10) along the first axis (7), in response to axial thrust exerted on the piston (10) or torque applied to the shaft (9); wherein the first portion (11) comprises a box body (11) designed to fit inside a fixed frame (3) of the machine to rotate about the first axis (7) by a gear train comprising two pinions (13), which rotate about a second axis (15) perpendicular to the first axis (7), and mesh with a ring gear (16) integral with said frame (3); wherein the second portion (17; 25) is housed inside the box body (11), **characterised in that** the mechanism
comprises a transmission (25)
comprising two right-angle connecting rods (29), which rotate in opposite directions about respective axes perpendicular to the first axis (7), and have respective small ends (28) connected in rotary and axially-fixed manner to a rod (26) guiding the piston (10); the transmission (25) also comprising, for each right-angle connecting rod (29), a crank (30), which is defined by a journal connected in rotary manner to the box body (11) to rotate about the second axis (15), and is connected rigidly to a respective pinion (13); the respective big ends (31) of the right-angle connecting rods (29) being hinged eccentrically to the cranks (30) by respective bearings, and connected to respective counter-rotating gears (32) which mesh with two ring gears (33) integral with the box body (11) and of twice the pitch diameter of the gears (32); the radii of the cranks (30) being equal to the length of the right-angle connecting rods (29) and to the pitch radius of the gears (32).

3. A mechanism for a reciprocating positive-displacement machine, the machine being of the type comprising at least a first power input/output member comprising a shaft (9); and at least a second power input/output member comprising at least a piston (10) reciprocating along a first axis (7); the mechanism (1) being interposed between the first and second power input/output member to transfer mechanical power from one to the other, and comprising a first portion (11) designed to connect angularly to the shaft (9) to rotate integrally with it, and a second portion (17; 25) connected angularly to the first portion (11) to rotate integrally with it, and having one end designed to connect to the piston (10); the mechanism being designed to rotate the first portion (11) about said first axis (7) and simultaneously reciprocate the piston (10) along the first axis (7), in response to axial thrust exerted on the piston (10) or torque applied to the shaft (9); wherein the first portion (11) comprises a box body (11) designed to fit inside a fixed frame (3) of the machine to rotate about the first axis (7) by a gear train comprising two pinions (13), which rotate about a second axis (15) perpendicular to the first axis (7), and mesh with a ring gear (16) integral with said frame (3); wherein the second portion (17; 25) is housed inside the box body (11), **characterised in that** the mechanism
comprises a transmission (25)
comprising two right-angle connecting rods (29) which rotate in opposite directions about respective axes perpendicular to the first axis (7), and two counter-rotating cranks (38), each of which is defined by a journal connected in rotary manner to the box body (11) to rotate about a third axis (39) perpendicular to the second axis (15); the right-angle connecting rods (29) having respective small ends connected in rotary and axially-fixed manner to a rod (26) guiding the piston (10), and respective big ends (31) hinged eccentrically to the respective cranks (38) by bearings, and the respective free ends of which are guided along respective straight trajectories, parallel to each other and crosswise to the first axis (7), by respective links (34) fixed to the box body (11); each crank (38) being connected by a gear train (40, 41) to a respective pinion (13) which rotates about the second axis (15).

4. A mechanism as claimed in anyone of the preceding Claims, wherein the mechanism (1) is further designed to rotate the piston (10) about said first axis (7) in response to axial thrust exerted on the piston (10) or torque applied to the shaft (9).

## Patentansprüche

1. Ein Mechanismus für eine sich hin und her bewegende Positivverdrängungsmaschine, wobei die Maschine von dem Typ ist, welche zumindest ein erstes Leistungs-Eingabe/Abgabe-Teil aufweisend eine Welle (9); und zumindest ein zweites Leistungs-Eingabe/Abgabe-Teil aufweisend zumindest einen Kolben (10), welcher sich entlang einer ersten Achse (7) hin und her bewegt, aufweist; wobei der Mechanismus (1) zwischen die Leistungs-Eingabe/Abgabe-Teile erstes Leistungs-Eingabe/Abgabe-Teil und zweites Leistungs-Eingabe/Abgabe-Teil zwischengefügt ist, um eine mechanische Leistung von dem einen zu dem anderen zu übertragen, und wobei er einen ersten Bereich (11), der dazu entworfen ist, mit der Welle (9) winkelmäßig zu verbinden, um mit dieser einstückig zu rotieren, und einen zweiten Bereich (17; 25), der mit dem ersten Bereich (11) winkelmäßig verbunden ist, um mit diesem einstückig zu rotieren, und der ein Ende aufweist, das dazu entworfen ist, um mit dem Kolben (10) zu verbinden, aufweist; wobei der Mechanismus dazu entworfen ist, im Ansprechen auf einen auf den Kolben (10) ausgeübten axialen Schub oder ein auf die Welle (9) aufgebrachtes Drehmoment den ersten Bereich (11) um die erste Achse (7) zu rotieren und gleichzeitig den Kolben (10) entlang der ersten Achse (7) hin und her zu bewegen; wobei der erste Bereich (11) einen Gehäusekörper (11) aufweist, der dazu entworfen ist, in einen festgelegten Rahmen (3) der Maschine zu passen, um durch einen Getriebezug aufweisend zwei Ritzel (13), welche um eine zu der ersten Achse (7) senkrechte zweite Achse (15) rotieren, und welche mit einem mit dem Rahmen (3) einstückigen Hohlrad (16) kämmen, um die erste Achse (7) zu rotieren; wobei der zweite Bereich (17; 25) innerhalb des Gehäusekörpers (11) aufgenommen ist, und er einen Pleuelstange-Kurbel-Mechanismus (17) aufweist, welcher eine um die zweite Achse (15) rotierende Kurbelwelle und ein Pleuelstangenmittel (18) aufweist, wobei das kleine Ende davon das Ende des zweiten Bereichs (17; 25) definiert, und es an dem Kolben (10) gelenkig befestigt ist, um sich mit ihm entlang der ersten Achse (7) hin und her zu bewegen, **dadurch gekennzeichnet, dass** die Kurbelwelle zwei gegensinnig rotierende Halbkurbelwellen aufweist, welche mit den Ritzeln (13) verbunden sind, und welche miteinander durch eine an den Gehäusekörper (11) gepasste Hauptlagerung gelenkig befestigt sind.

2. Ein Mechanismus für eine sich hin und her bewegende Positivverdrängungsmaschine, wobei die Maschine von dem Typ ist, welche zumindest ein erstes Leistungs-Eingabe/Abgabe-Teil aufweisend eine Welle (9); und zumindest ein zweites Leistungs-Eingabe/Abgabe-Teil aufweisend zumindest einen Kolben (10), welcher sich entlang einer ersten Achse (7) hin und her bewegt, aufweist; wobei der Mechanismus (1) zwischen die Leistungs-Eingabe/Abgabe-Teile erstes Leistungs-Eingabe/Abgabe-Teil und zweites Leistungs-Eingabe/Abgabe-Teil zwischengefügt ist, um eine mechanische Leistung von dem einen zu dem anderen zu übertragen, und wobei er einen ersten Bereich (11), der dazu entworfen ist, mit der Welle (9) winkelmäßig zu verbinden, um mit dieser einstückig zu rotieren, und einen zweiten Bereich (17; 25), der mit dem ersten Bereich (11) winkelmäßig verbunden ist, um mit diesem einstückig zu rotieren, und der ein Ende aufweist, das dazu entworfen ist, um mit dem Kolben (10) zu verbinden, aufweist; wobei der Mechanismus dazu entworfen ist, im Ansprechen auf einen auf den Kolben (10) ausgeübten axialen Schub oder ein auf die Welle (9) aufgebrachtes Drehmoment den ersten Bereich (11) um die erste Achse (7) zu rotieren und gleichzeitig den Kolben (10) entlang der ersten Achse (7) hin und her zu bewegen; wobei der erste Bereich (11) einen Gehäusekörper (11) aufweist, der dazu entworfen ist, in einen festgelegten Rahmen (3) der Maschine zu passen, um durch einen Getriebezug aufweisend zwei Ritzel (13), welche um eine zu der ersten Achse (7) senkrechte zweite Achse (15) rotieren, und welche mit einem mit dem Rahmen (3) einstückigen Hohlrad (16) kämmen, um die erste Achse (7) zu rotieren; wobei der zweite Bereich (17; 25) innerhalb des Gehäusekörpers (11) aufgenommen ist, **dadurch gekennzeichnet, dass** der Mechanismus ein Getriebe (25) aufweist, welches zwei rechtwinklige Pleuelstangen (29) aufweist, welche in entgegen gerichtete Richtungen um jeweilige zu der ersten Achse (7) senkrechte Achsen rotieren, und welche jeweilige kleine Enden (28) aufweisen, welche in einer rotierenden und axial festgelegten Weise mit einer Stange (26) verbunden sind, welche den Kolben (10) führt; wobei das Getriebe (25) für jede rechtwinklige Pleuelstange (29) auch eine Kurbel (30) aufweist, welche durch einen in rotierender Weise mit dem Gehäusekörper (11) verbundenen Wellenzapfen definiert ist, um um die zweite Achse (15) zu rotieren, und welcher mit einem jeweiligen Ritzel (13) steif verbunden ist; wobei die jeweiligen großen Enden (31) der rechtwinkligen Pleuelstangen (29) durch jeweilige Lagerungen exzentrisch mit den Kurbeln (30) gelenkig befestigt sind, und sie mit jeweiligen gegensinnig rotierenden Zahnrädern (32) verbunden sin, welche mit zwei Hohlrädern (33) kämmen, welche mit dem Gehäusekörper (11) einstückig und vom Doppelten des Teilkreisdurchmessers der Zahnräder (32) sind; wobei die Radien der Kurbeln (30) gleich zu der Länge der rechtwinkeligen Pleuelstangen (29) und zu dem Teilkreisradius der Zahnräder (32) sind.

3. Ein Mechanismus für eine sich hin und her bewegende Positivverdrängungsmaschine, wobei die Maschine von dem Typ ist, welche zumindest ein erstes Leistungs-Eingabe/Abgabe-Teil aufweisend eine Welle (9); und zumindest ein zweites Leistungs-Eingabe/Abgabe-Teil aufweisend zumindest einen Kolben (10), welcher sich entlang einer ersten Achse (7) hin und her bewegt, aufweist; wobei der Mechanismus (1) zwischen die Leistungs-Eingabe/Abgabe-Teile erstes Leistungs-Eingabe/Abgabe-Teil und zweites Leistungs-Eingabe/Abgabe-Teil zwischengefügt ist, um eine mechanische Leistung von dem einen zu dem anderen zu übertragen, und wobei er einen ersten Bereich (11), der dazu entworfen ist, mit der Welle (9) winkelmäßig zu verbinden, um mit dieser einstückig zu rotieren, und einen zweiten Bereich (17; 25), der mit dem ersten Bereich (11) winkelmäßig verbunden ist, um mit diesem einstückig zu rotieren, und der ein Ende aufweist, das dazu entworfen ist, um mit dem Kolben (10) zu verbinden, aufweist; wobei der Mechanismus dazu entworfen ist, im Ansprechen auf einen auf den Kolben (10) ausgeübten axialen Schub oder ein auf die Welle (9) aufgebrachtes Drehmoment den ersten Bereich (11) um die erste Achse (7) zu rotieren und gleichzeitig den Kolben (10) entlang der ersten Achse (7) hin und her zu bewegen; wobei der erste Bereich (11) einen Gehäusekörper (11) aufweist, der dazu entworfen ist, in einen festgelegten Rahmen (3) der Maschine zu passen, um durch einen Getriebezug aufweisend zwei Ritzel (13), welche um eine zu der ersten Achse (7) senkrechte zweite Achse (15) rotieren, und welche mit einem mit dem Rahmen (3) einstückigen Hohlrad (16) kämmen, um die erste Achse (7) zu rotieren; wobei der zweite Bereich (17; 25) innerhalb des Gehäusekörpers (11) aufgenommen ist, **dadurch gekennzeichnet, dass** der Mechanismus ein Getriebe (25) aufweist, welches zwei rechtwinklige Pleuelstangen (29), welche in entgegen gerichtete Richtungen um jeweilige zu der ersten Achse (7) senkrechte Achsen rotieren, und zwei gegensinnig rotierende Kurbeln (38), von welchen jede durch einen Wellenzapfen definiert wird, der in einer rotierenden Weise mit dem Gehäusekörper (11) verbunden ist, um um eine zu der zweiten Achse (15) senkrechte dritte Achse (39) zu rotieren, aufweist; wobei die rechtwinkligen Pleuelstangen (29) jeweilige kleine Enden, welche in einer rotierenden und axial festgelegten Weise mit einer Stange (26) verbunden sind, welche den Kolben (10) führt, und jeweilige große Enden (31), welche durch Lagerungen exzentrisch zu den jeweiligen Kurbeln (39) gelenkig befestigt sind, aufweisen, und wobei die jeweiligen freien Enden von diesen entlang jeweiliger gerader Trajektorien zueinander parallel und zu der ersten Achse (7) gekreuzt durch jeweilige zu dem Gehäusekörper (11) festgelegte Verbindungen (34) geführt werden; wobei jede Kurbel (38) durch einen Getriebezug (40, 41) mit einem jeweiligen Ritzel (13) verbunden ist, welches um die zweite Achse (15) rotiert.

4. Ein Mechanismus wie in einem beliebigen der vorstehenden Ansprüche beansprucht, wobei der Mechanismus (1) darüber hinaus dazu entworfen ist, den Kolben (10) um die erste Achse (7) im Ansprechen auf einen auf den Kolben (10) ausgeübten axialen Schub oder ein auf die Welle (9) aufgebrachtes Drehmoment zu rotieren.

## Revendications

1. Mécanisme pour une machine à déplacement positif à va-et-vient, la machine étant du type comprenant au moins un premier organe d'entrée/sortie de puissance comprenant un arbre (9) ; et au moins un second organe d'entrée/sortie de puissance comprenant au moins un piston (10) animé d'un mouvement de va-et-vient le long d'un premier axe (7) ; le mécanisme (1) étant interposé entre les premier et second organes d'entrée/sortie de puissance pour transférer de la puissance mécanique de l'un à l'autre, et comprenant une première portion (11) conçue pour être reliée angulairement à l'arbre (9) pour tourner d'un seul tenant avec lui, et une seconde portion (17 ; 25) reliée angulairement à la première portion (11) pour tourner d'un seul tenant avec elle, et ayant une extrémité conçue pour être reliée au piston (10) ; le mécanisme étant conçu pour faire tourner la première portion (11) autour dudit premier axe (7) et simultanément animer d'un mouvement de va-et-vient le piston (10) le long du premier axe (7), en réponse à une poussée axiale exercée sur le piston (10) ou au couple appliqué à l'arbre (9) ; dans lequel la première portion (11) comprend un corps de boîte (11) conçu pour être installé à l'intérieur d'un cadre fixe (3) de la machine pour tourner autour du premier axe (17) par un train d'engrenages comprenant deux pignons (13), qui tournent autour d'un deuxième axe (15) perpendiculaire au premier axe (7), et s'emboîtent avec une couronne dentée (16) faisant corps avec ledit cadre (3) ; dans lequel la seconde portion (17 ; 25) est logée à l'intérieur du corps de boîte (11) et comprend un mécanisme de bielle-manivelle (17), qui comprend un vilebrequin tournant autour du deuxième axe (15) et un moyen formant bielle (18), dont la petite extrémité définit ladite extrémité de la seconde portion (17 ; 25) et s'articule sur le piston (10) pour effectuer un mouvement de va-et-vient avec lui le long du premier axe (7), **caractérisé en ce que** le vilebrequin comprend deux demi-vilebrequins contrarotatifs reliés auxdits pignons (13) et s'articulant l'un sur l'autre par un palier principal installé sur le corps de boîte (11).

2. Mécanisme pour une machine à déplacement positif à va-et-vient, la machine étant du type comprenant au moins un premier organe d'entrée/sortie de puissance comprenant un arbre (9) ; et au moins un second organe d'entrée/sortie de puissance comprenant au moins un piston (10) animé d'un mouvement de va-et-vient le long d'un premier axe (7) ; le mécanisme (1) étant interposé entre les premier et second organes d'entrée/sortie de puissance pour transférer de la puissance mécanique de l'un à l'autre, et comprenant une première portion (11) conçue pour être reliée angulairement à l'arbre (9) pour tourner d'un seul tenant avec lui, et une seconde portion (17 ; 25) reliée angulairement à la première portion (11) pour tourner d'un seul tenant avec elle, et ayant une extrémité conçue pour être reliée au piston (10) ; le mécanisme étant conçu pour faire tourner la première portion (11) autour dudit premier axe (7) et simultanément animer d'un mouvement de va-et-vient le piston (10) le long du premier axe (7), en réponse à une poussée axiale exercée sur le piston (10) ou au couple appliqué à l'arbre (9) ; dans lequel la première portion (11) comprend un corps de boîte (11) conçu pour être installé à l'intérieur d'un cadre fixe (3) de la machine pour tourner autour du premier axe (7) par un train d'engrenages comprenant deux pignons (13), qui tournent autour d'un deuxième axe (15) perpendiculaire au premier axe (17), et s'emboîtent avec une couronne dentée (16) faisant corps avec ledit cadre (3) ; dans lequel la seconde portion (17 ; 25) est logée à l'intérieur du corps de boîte (11), **caractérisé en ce que** le mécanisme comprend une transmission (25) comprenant deux bielles à angle droit (29), qui tournent dans des directions opposées autour d'axes respectifs perpendiculaires au premier axe (7), et ont des petites extrémités respectives (28) reliées d'une manière rotative et axialement fixe à une broche (26) guidant le piston (10) ; la transmission (25) comprenant également, pour chaque bielle à angle droit (29), une manivelle (30), qui est définie par un tourillon relié de manière rotative au corps de boîte (11) pour tourner autour du deuxième axe (15), et est reliée à demeure à un pignon respectif (13) ; les grandes extrémités respectives (31) des bielles à angle droit (29) s'articulant de manière excentrique aux manivelles (30) par des paliers respectifs, et étant reliés à des engrenages contrarotatifs respectifs (32) qui s'emboîtent avec deux couronnes dentées (33) faisant corps avec le corps de boîte (11) et faisant le double du diamètre primitif des engrenages (32) ; les rayons des manivelles (30) étant égaux à la longueur des bielles à angle droit (29) et au rayon primitif des engrenages (32).

3. Mécanisme pour une machine à déplacement positif à va-et-vient, la machine étant du type comprenant au moins un premier organe d'entrée/sortie de puissance comprenant un arbre (9) ; et au moins un second organe d'entrée/sortie de puissance comprenant au moins un piston (10) animé d'un mouvement de va-et-vient le long d'un premier axe (7) ; le mécanisme (1) étant interposé entre les premier et second organes d'entrée/sortie de puissance pour transférer de la puissance mécanique de l'un à l'autre, et comprenant une première portion (11) conçue pour être reliée angulairement à l'arbre (9) pour tourner d'un seul tenant avec lui, et une seconde portion (17 ; 25) reliée angulairement à la première portion (11) pour tourner d'un seul tenant avec elle, et ayant une extrémité conçue pour être reliée au piston (10) ; le mécanisme étant conçu pour faire tourner la première portion (11) autour dudit premier axe (7) et simultanément animer d'un mouvement de va-et-vient le piston (10) le long du premier axe (7), en réponse à une poussée axiale exercée sur le piston (10) ou au couple appliqué à l'arbre (9) ; dans lequel la première portion (11) comprend un corps de boîte (11) conçu pour être installé à l'intérieur d'un cadre fixe (3) de la machine pour tourner autour du premier axe (7) par un train d'engrenages comprenant deux pignons (13), qui tournent autour d'un deuxième axe (15) perpendiculaire au premier axe (17), et s'emboîtent avec une couronne dentée (16) faisant corps avec ledit cadre (3) ; dans lequel la seconde portion (17 ; 25) est logée à l'intérieur du corps de boîte (11), **caractérisé en ce que** le mécanisme comprend une transmission (25) comprenant deux bielles à angle droit (29) qui tournent dans des directions opposées autour d'axes respectifs perpendiculaires au premier axe (7), et deux manivelles contrarotatives (38), dont chacune est définie par un tourillon relié de manière rotative au corps de boîte (11) pour tourner autour d'un troisième axe (39) perpendiculaire au deuxième axe (15) ; les bielles à angle droit (29) ayant des petites extrémités respectives reliées de manière rotative et axialement fixe à une broche (26) guidant le piston (10), et des grandes extrémités respectives (31) s'articulant de manière excentrique sur les manivelles respectives (38) par des paliers, et dont les extrémités libres respectives sont guidées le long de trajectoires droites respectives, parallèles entre elles et transversales au premier axe (7), par des maillons respectifs (34) fixés au corps de boîte (11) ; chaque manivelle (38) étant reliée par un train d'engrenages (40, 41) à un pignon respectif (13) qui tourne autour du deuxième axe (15).

4. Mécanisme selon l'une quelconque des revendications précédentes, dans lequel le mécanisme (1) est en outre conçu pour faire tourner le piston (10) autour dudit premier axe (7) en réponse à une poussée axiale exercée sur le piston (10) ou à un couple appliqué à l'arbre (9).
